# EUROPEAN PATENT APPLICATION

(11) **EP 1 158 435 A2**
(43) Date of publication of application: **28.11.2001**
(21) Application number: 01111674.6
(22) Date of filing: 14.05.2001
(51) Int. Cl.: G06F 17/60, G06F 17/21

(54) **Electric mail sending apparatus enabling a display form on a receiver's terminal to be known in advance, electric mail composing method, and computer-readable recording medium having an electric mail composing program recorded thereon**

(30) Priority: 19.05.2000 JP 2000147742
(71) Applicant: Sharp Kabushiki Kaisha, Osaka-shi Osaka (JP)
(72) Inventor: Itani, Hiroshi, Raporu Kamtori Apt. 249, Chiba-shi, Chiba (JP); Ohnishi, Akimoto, Yamatokoriyama-shi, Nara (JP)
(74) Representative: Müller . Hoffmann & Partner Patentanwälte

(57) **Abstract**

An electric mail composing method includes the steps of accepting an electric mail text composed or edited by the user (S30), accepting a receiver's terminal model name selected by the user (S31), reading a display form defined based on the receiver's terminal model name from an attribute table (S32), and displaying the electric mail text on a display portion (13) based on the display form read from the attribute table (S32).

## Description

### BACKGROUND OF THE INVENTION

### Field of the Invention

The present invention generally relates to an e-mail (electric mail) sending apparatus, an e-mail composing method, and a computer-readable recording medium having an e-mail composing program recorded thereon. More particularly, the present invention relates to an e-mail sending apparatus enabling how an e-mail text will be displayed on a receiver's terminal to be known in advance, an e-mail composing method, and a computer-readable recording medium having an e-mail composing program recorded thereon.

### Description of the Background Art

An e-mail editing screen of conventional e-mail systems is formed from an operation area where operation buttons for editing an e-mail are arranged, an address area for inputting a receiver's e-mail address, a subject area for inputting an e-mail subject, a text area for inputting an e-mail text, and the like.

The text area has a preset displayable number of characters, i.e., a preset number of characters per line and a preset displayable number of lines per screen. After a line feed code is added to every line of the e-mail text input to the text area, the e-mail text is sent to the receiver's e-mail address.

However, every mail system has a different number of characters per line and a different displayable number of lines per screen in the text area. Therefore, if the number of characters per line of the received e-mail does not match the preset number of characters per line of the text area, it is hard for the receiver to see the received e-mail.

A preset parameter value in the text area can be changed. However, the sender of the e-mail is not able to know in advance the preset parameter value in the text area of the receiver's e-mail system. Accordingly, the sender cannot change a parameter value of the e-mail in order to send the e-mail that is easy for the receiver to see.

### SUMMARY OF THE INVENTION

The present invention is made in view of such problems, and it is an object of the invention to provide an e-mail sending apparatus capable of composing an e-mail text that is easy for an e-mail receiver to see, an e-mail composing method, and a computer-readable recording medium having an e-mail composing program recorded thereon.

An e-mail sending apparatus according to one aspect of the invention includes: an editing unit for composing and editing a text of an e-mail; an attribute table storing a display form defined based on a terminal model name; an accepting unit for accepting a receiver's terminal model name that is input by a user; a reading unit connected to the attribute table and the accepting unit for reading the display form defined based on the receiver's terminal model name from the attribute table; a display unit connected to the editing unit and the reading unit for displaying the e-mail text based on the display form read from the attribute table; and a sending unit connected to the editing unit for sending the composed e-mail.

A display form of a receiver's terminal model is pre-stored in the attribute table, so that an e-mail text is displayed according to the display form of the receiver's terminal model. This allows the user to know in advance how the e-mail text will be displayed on the receiver's terminal. Accordingly, the user can compose and edit an e-mail text that is easy for the e-mail receiver to see.

Preferably, the display unit displays copy data of the e-mail text based on the display form read from the attribute table.

Copy data of the e-mail text is used for display on the screen. The display data has a line feed code(s) or the like added thereto for display. In the case where the copy data is not used, a process of converting the input data processed for display to outgoing data is required for sending the e-mail. However, the use of the copy data eliminates the need for such a process.

An e-mail composing method according to another aspect of the invention is used in an e-mail composing apparatus including an attribute table storing a display form defined based on a terminal model name and a display portion for displaying an e-mail text. The e-mail composing method includes the steps of: accepting an e-mail text composed or edited by a user; accepting a receiver's terminal model name selected by the user; reading a display form defined based on the receiver's terminal model name from the attribute table; and displaying the e-mail text on the display portion based on the display form read from the attribute table.

A display form of a receiver's terminal model is pre-stored in the attribute table, so that an e-mail text is displayed according to the display form of the receiver's terminal model. This allows the user to know in advance how the e-mail text will be displayed on the receiver's terminal. Accordingly, the user can compose and edit an e-mail text that is easy for the e-mail receiver to see.

Preferably, the displaying step includes the step of displaying copy data of the e-mail text on the display portion based on the display form read from the attribute table.

Copy data of the e-mail text is used for display on the screen. The display data has a line feed code(s) or the like added thereto for display. In the case where the copy data is not used, a process of converting the input data processed for display to outgoing data is required for sending the e-mail. However, the use of the copy data eliminates the need for such a process.

A computer-readable recording medium according to still another aspect of the invention has an e-mail composing program recorded thereon. The e-mail composing program causes a computer to execute the steps of: accepting an e-mail text composed or edited by a user; accepting a receiver's terminal model name selected by the user; and displaying the e-mail text on a display portion based on a display form defined based on the receiver's terminal model name.

A display form of a receiver's terminal model is pre-stored in the attribute table, so that an e-mail text is displayed according to the display form of the receiver's terminal model. This allows the user to know in advance how the e-mail text will be displayed on the receiver's terminal. Accordingly, the user can compose and edit an e-mail text that is easy for the e-mail receiver to see.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the hardware configuration of an e-mail system according to an embodiment of the present invention.
Fig. 2 is a diagram showing an example of the screen structure of the e-mail system according to an embodiment of the present invention.
Fig. 3 is a diagram showing an example of the data stored in an attribute table.
Fig. 4 is a flowchart illustrating an e-mail composing/sending process.
Fig. 5 is a diagram showing an example of the screen structure adapted to a receiver's terminal.
Fig. 6 is a flowchart illustrating a process of changing the size of an e-mail text.
Fig. 7 is a diagram showing an example of the screen structure adapted to a receiver's terminal.
Fig. 8 is a diagram showing an example of the screen structure adapted to a receiver's terminal.

### DESCRIPTION OF THE PREFERRED EMBODIMENTS

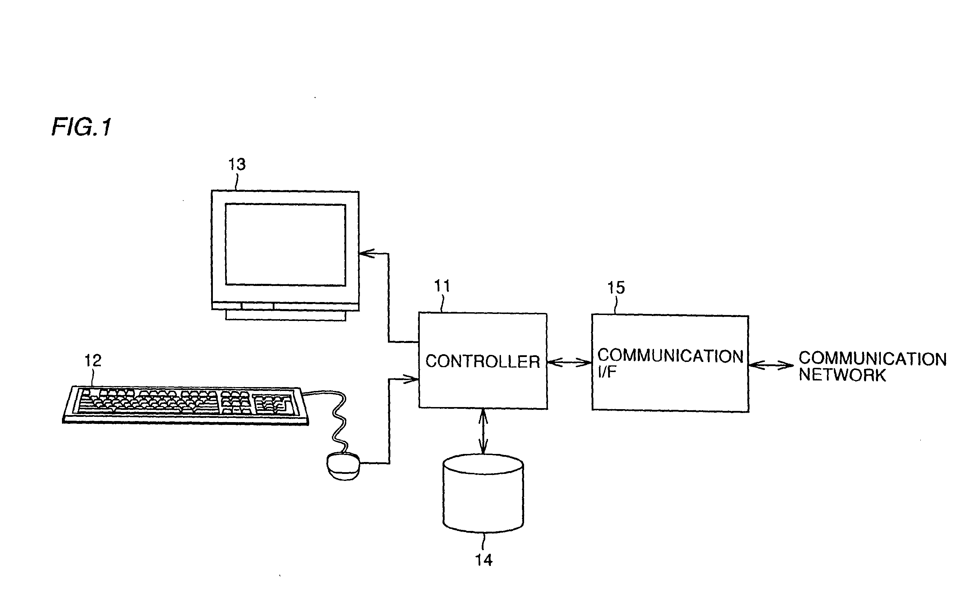

Referring to Fig. 1, an e-mail system according to an embodiment of the invention is implemented by a computer terminal unit and a program executed thereon.

The computer terminal unit includes an input device 12 used by the user for data input, a display device 13 for outputting the data, a storage device 14 for storing the data, a communication interface 15 connected to an external communication network for conducting data communication with an external terminal connected to the network, a controller 11 connected to the input device 12, display device 13, storage device 14 and communication interface 15 for starting a system program pre-stored in the storage device 14 and controlling each element according to the system program.

The controller 11 also starts an e-mail system program pre-stored in the storage device 14 according to the instruction from the input device 12 so as to execute the processing such as inputting, sending, receiving and displaying various data.

The input device 12 is formed from a keyboard, a mouse, and the like. With the input device 12, the user can input a receiver's address, a message text, a display layout and the like as well as instruct to send or receive an e-mail and the like.

The display device 13 is formed from a display, a printer, and the like, and displays an outgoing message that is being composed or an incoming message.

The storage device 14 is formed from a ROM (Read Only Memory) and a RAM (Random Access Memory). The ROM stores a system program that allows the controller 11 to control the operation of various devices, a program for implementing various functions, and an e-mail system program. The RAM temporarily stores the data involved in input/output, and also temporarily stores the data of an outgoing message that is being composed, and the like.

The e-mail system program may be recorded on a not-shown CD-ROM (Compact Disc-Read Only Memory) so as to be installed on the storage device 14. This program may be recorded on a recording medium such as magneto-optical (MO) disk and floppy disk, instead of the CD-ROM.

The communication interface 15 is used to connect the computer terminal unit to a communication network such as LAN (Local Area Network) or telephone line. The composed e-mail message data is read from the storage device 14, and sent via the communication interface 15 to the receiver's e-mail address. E-mail message data sent to the sender himself/herself from another computer terminal is received at the communication interface 15, and stored in the storage device 14 through the controller 11.

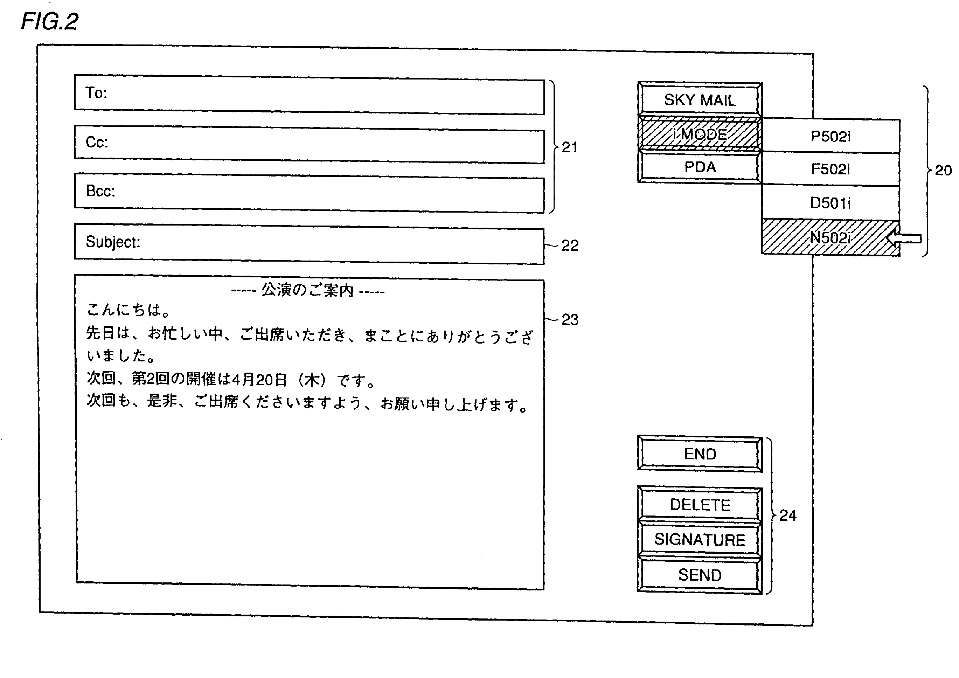

The screen structure of the e-mail system according to the present embodiment will be described with reference to Fig. 2. Like general-purpose e-mail systems, an address area 21 for inputting a receiver's e-mail address, a subject area 22 for inputting an e-mail subject, a text area 23 for inputting or displaying an e-mail text, and regular operation buttons 24 are arranged on the screen. A menu 20 for selecting a receiver's terminal model is also arranged on the screen of Fig. 2.

The menu 20 is formed from buttons and pull-down menus. When the sender presses the button indicating the type of an e-mail, the terminal model names registered in an attribute table described later are displayed on the pull-down menu. For example, if the sender presses the button "i-mode", the receiver's terminal model names having the attribute "i-mode", i.e., "P502i", "F502i", "D501i" and "N502i" are displayed on the pull-down menu.

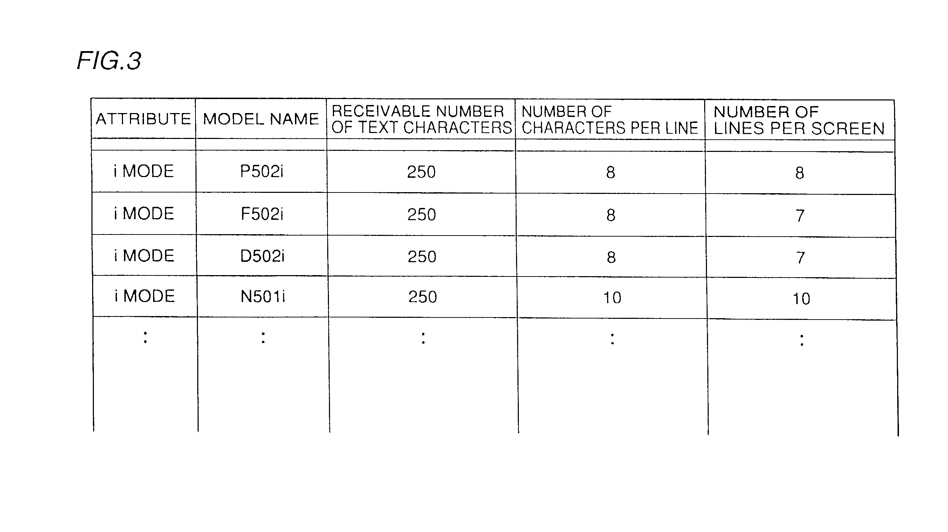

Referring to Fig. 3, the attribute table pre-stored in the storage device 14 includes an attribute indicating the type of an e-mail, a receiver's terminal model name, the terminal's receivable number of text characters, the number of characters per line in the text area of an e-mail system used, and the number of lines per screen of the text area.

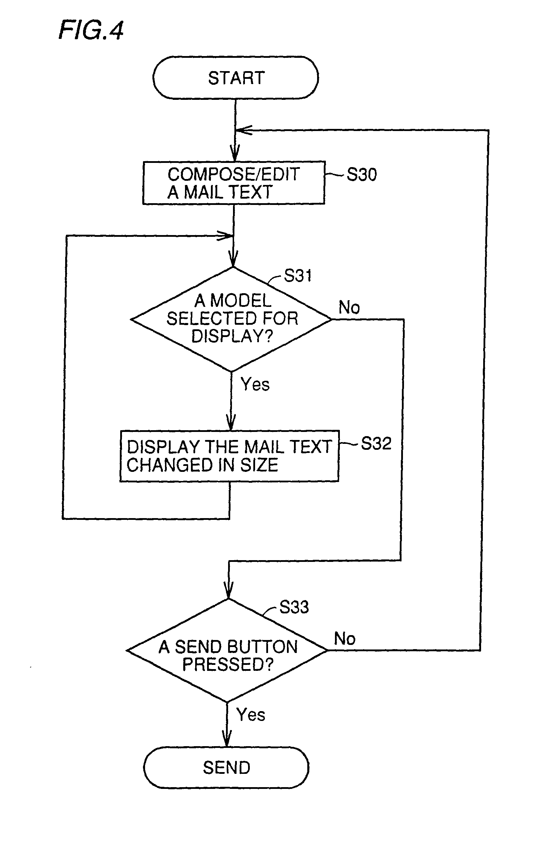

A series of processes from composing to sending an e-mail by the e-mail system of the present invention will be described with reference to Fig. 4.

The sender starts the e-mail program to compose and edit a receiver's address, subject and text of the e-mail (S30). If the sender selects a terminal model from the menu 20 (YES in S31), the controller 11 displays the e-mail text on the screen in a size corresponding to the screen of the selected terminal model (S32).

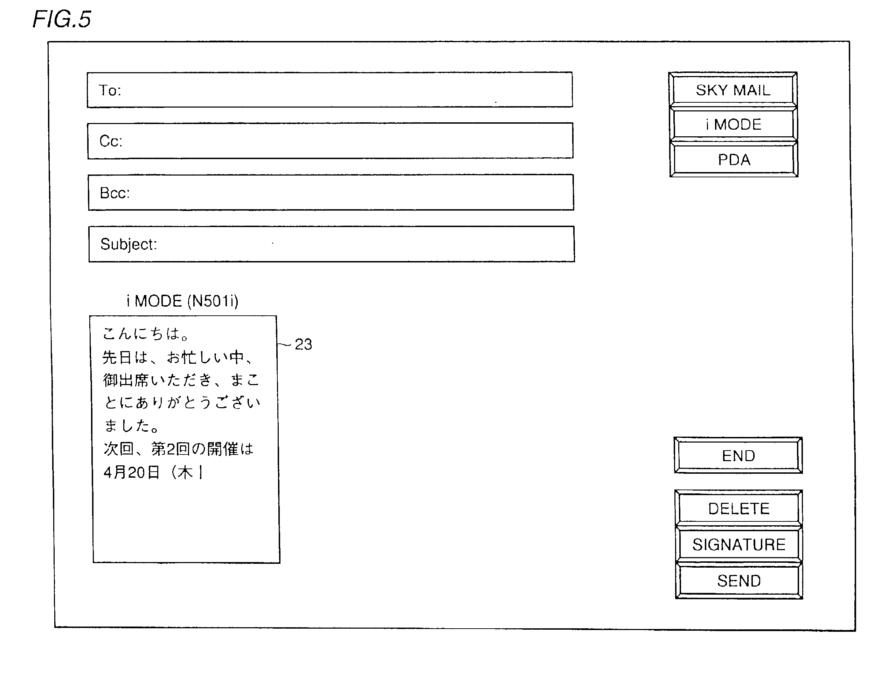

Referring to Fig. 5, if the sender selects, e.g., the terminal model name "N502i" from the menu 20, the controller 11 refers to the attribute table stored in the storage device 14, and sets the number of characters in the e-mail text area 23 to 10 lines by 10 characters.

After viewing the display screen, the sender can change the display by selecting a different model (YES in S31, S32). Alternatively, the sender can also re-edit the e-mail text (S30) without pressing a send button (NO in S31, NO in S33).

Having composed the e-mail text, the sender presses the send button (YES in S33) to send the mail.

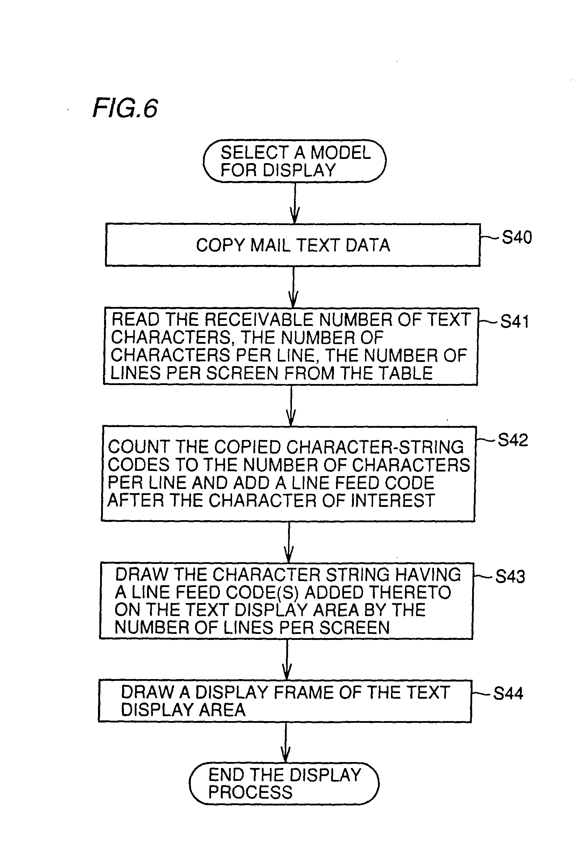

Step S32 of Fig. 4 will be described in detail with reference to Fig. 6. When the sender selects a terminal model name from the menu 20 of Fig. 2, the data of the e-mail text is copied to the storage device 14 (S40).

The receivable number of text characters, the number of characters per line, and the number of lines per screen of the selected terminal model are read from the attribute table of Fig. 3 (S41).

The controller 11 sequentially counts the number of character-string codes of the e-mail text stored in the storage device 14 from the top of the e-mail text. Every time the number of character-string codes reaches the number of characters per line, the controller 11 adds a line feed code at that position (S42). Note that every time a line feed code is read from the e-mail text, the number of character-string codes is reset to zero.

The character string having a line feed code(s) added thereto is drawn in the text area 23 by the number of lines per screen (S43), and a display frame of the text area 23 is drawn (S44).

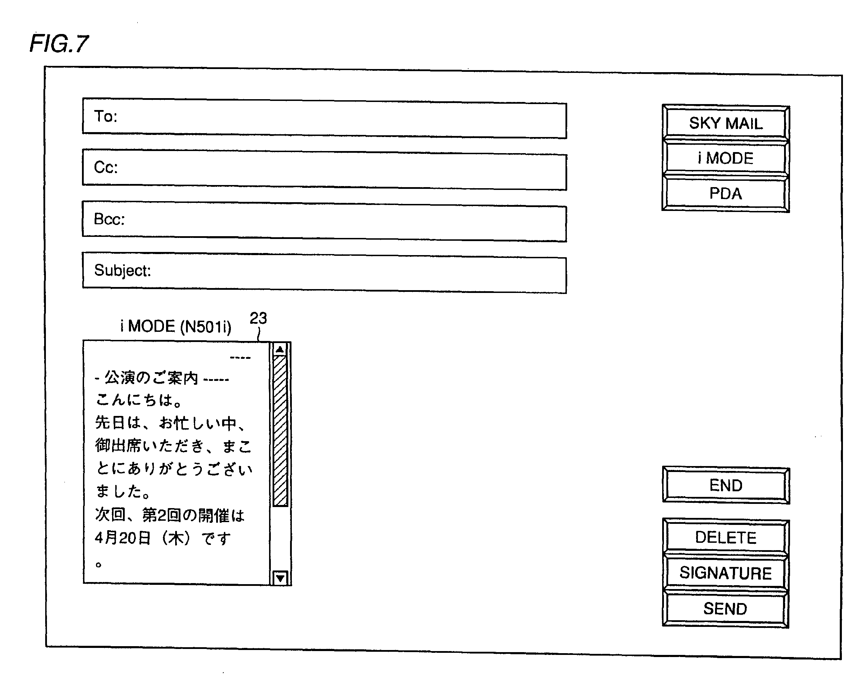

If the series of steps S40 to S44 is conducted with the mail text as shown in Fig. 2 having been composed, the display as shown in Fig. 7 is obtained. The text area 23 is displayed in a form corresponding to the screen of the selected terminal model. A scroll bar for scrolling the e-mail text is also displayed on the right of the text area 23. Note that if it is possible to display the entire e-mail text within the text area 23, the scroll bar is not displayed as shown in Fig. 5.

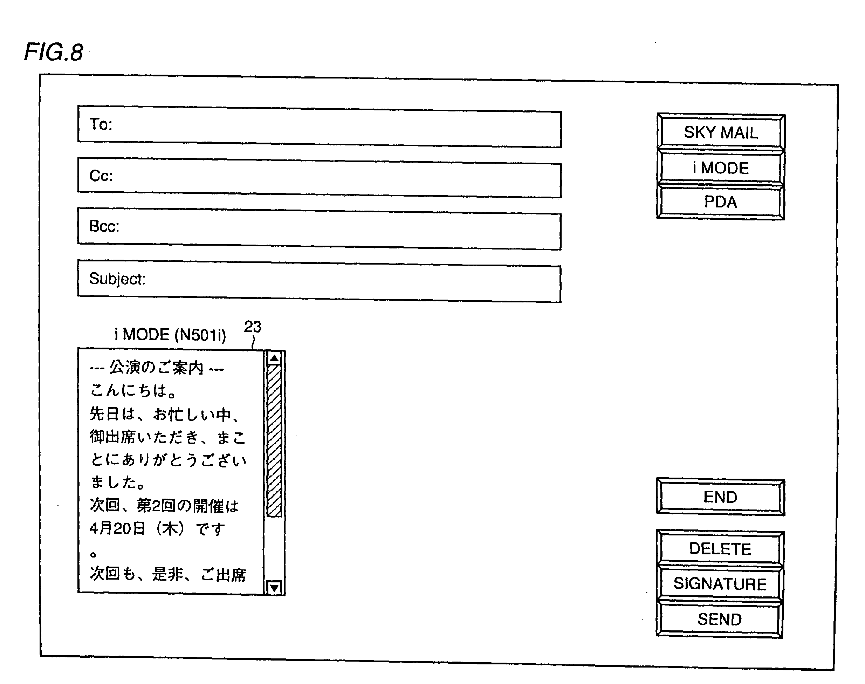

By viewing the text area 23 of Fig. 7, the sender knows how the e-mail text will be displayed on the receiver's terminal. It can be seen that the first and second lines of the text area 23 are displaced in the example of Fig. 7. Therefore, the sender re-edits the e-mail text in step S30 of Fig. 4 so as to compose the text as shown in Fig. 8. Thus, the e-mail that is easy for the receiver to see can be sent.

As has been described above, according to the present embodiment, the e-mail text is displayed in a form corresponding to a receiver's terminal model. This allows the sender to know in advance how the e-mail text will be displayed on the receiver's terminal. Accordingly, the sender can compose and edit an e-mail text that is easy for the e-mail receiver to see.

Moreover, input data is used for an outgoing e-mail, and copy data of the input data is used for display of an e-mail text on the screen. The display data has a line feed code(s) or the like added thereto for display. In the case where the copy data is not used, a process of converting the input data processed for display to outgoing data is required for sending the e-mail. However, since the copy data is used in the present embodiment, such a process is not necessary.

According to the present invention, an e-mail text is displayed according to the display form of a receiver's terminal model. This allows the user to know in advance how the e-mail text will be displayed on the receiver's terminal. Accordingly, the user can compose and edit an e-mail text that is easy for the e-mail receiver to see.

Moreover, copy data of an e-mail text is used for display on the screen. The display data has a line feed code(s) or the like added thereto for display. In the case where the copy data is not used, a process of converting the input data processed for display to outgoing data is required for sending the e-mail. However, the use of the copy data eliminates the need for such a process.

Although the present invention has been described and illustrated in detail, it is clearly understood that the same is by way of illustration and example only and is not to be taken by way of limitation, the sprit and scope of the present invention being limited only by the terms of the appended claims.

## Claims

1. An electric mail sending apparatus, comprising:
editing means (S30) for composing and editing a text of an electric mail;
an attribute table storing a display form defined based on a terminal model name;
accepting means (S31) for accepting a receiver's terminal model name that is input by a user;
reading means (S32) connected to the attribute table and the accepting means (S30) for reading the display form defined based on the receiver's terminal model name from the attribute table;
display means (S32) connected to the editing means (S30) and the reading means (S32) for displaying the electric mail text based on the display form read from the attribute table; and
sending (S33) means connected to the editing means (S30) for sending the composed electric mail.

2. The electric mail sending apparatus according to claim 1, wherein
the attribute table stores a number of lines that is displayable on a display screen of a receiver's terminal and a number of characters per line,
the reading means (S32) includes number-of-character reading means (S41) for reading the number of lines that is displayable on the display screen of the receiver's terminal and the number of characters per line, and
the display means (S32) includes means (S43) connected to the editing means (S30) and the number-of-character reading means (S41) for displaying the electric mail text based on the displayable number of lines and the number of characters per line that are read from the attribute table.

3. The electric mail sending apparatus according to claim 1, wherein the display means (S32) displays copy data of the electric mail text based on the display form read from the attribute table.

4. An electric mail composing method for use in an electric mail composing apparatus including an attribute table storing a display form defined based on a terminal model name and a display portion (13) for displaying an electric mail text, comprising the steps of:
accepting an electric mail text composed or edited by a user (S30);
accepting a receiver's terminal model name selected by the user (S31);
reading a display form defined based on the receiver's terminal model name from the attribute table (S32); and
displaying the electric mail text on the display portion (13) based on the display form read from the attribute table (S32).

5. The electric mail composing method according to claim 4, wherein
the attribute table stores a number of lines that is displayable on a display screen of a receiver's terminal and a number of characters per line,
the reading step (S32) includes the step of reading the number of lines that is displayable on the display screen of the receiver's terminal and the number of characters per line (S41), and
the displaying step (S32) includes the step of displaying the electric mail text on the display portion (13) based on the displayable number of lines and the number of characters per line that are read from the attribute table (S43).

6. The electric mail composing method according to claim 4, wherein the displaying step (S32) includes the step of displaying copy data of the electric mail text on the display portion (13) based on the display form read from the attribute table (S40~S44).

7. A computer-readable recording medium having an electric mail composing program recorded thereon, wherein the electric mail composing program causes a computer to execute the steps of:
accepting an electric mail text composed or edited by a user (S30);
accepting a receiver's terminal model name selected by the user (S31); and
displaying the electric mail text on a display portion (13) based on a display form defined based on the receiver's terminal model name (S32).

8. The computer-readable recording medium according to claim 7, wherein
the displaying step (S32) includes the step of displaying the electric mail text on the display portion (13) based on the displayable number of lines and the number of characters per line that is displayable on the display screen (S43).

9. The computer-readable recording medium according to claim 7, wherein the displaying step includes the step (S32) of displaying copy data of the electric mail text on the display portion (13) based on the display form defined based on the receiver's terminal model name (S40~S44).
